Europäisches Patentamt

European Patent Office

Office européen des brevets

(11) Numéro de publication: **0 250 685 B1**

# (12) FASCICULE DE BREVET EUROPEEN

(45) Date de publication de fascicule du brevet:
18.09.91

(51) Int. Cl.⁵: **H01F 36/00**

(21) Numéro de dépôt: **86401182.0**

(22) Date de dépôt: **03.06.86**

(54) **Machine statique supraconductrice à circuit magnétique.**

(43) Date de publication de la demande:
**07.01.88 Bulletin 88/01**

(45) Mention de la délivrance du brevet:
**18.09.91 Bulletin 91/38**

(84) Etats contractants désignés:
**AT BE CH DE GB IT LI NL SE**

(56) Documents cités:
**FR-A- 1 298 658**
**FR-A- 1 519 922**
**FR-A- 1 547 528**
**FR-A- 2 581 473**

**REVUE GENERALE DE L'ELECTRICITE, vol. 83,
no. 10, octobre 1974, pages 697-702; G.
BRONCA et al.: "Les aimants supraconducteurs en physique: problèmes et perspectives"**

(73) Titulaire: **GEC ALSTHOM SA**
**38, avenue Kléber**
**F-75116 Paris(FR)**

(72) Inventeur: **Fevrier, Alain**
**25 avenue du Parisis**
**F-78310 Maurepas(FR)**
Inventeur: **Kermarrec, Jean-Claude**
**73bis rue Lavoisier**
**F-78140 Velizy-Villacoublay(FR)**
Inventeur: **Bottini, Gérard**
**Rue du Champ Chevron**
**F-91510 Lardy(FR)**

(74) Mandataire: **Weinmiller, Jürgen et al**
**Lennéstrasse 9 Postfach 24**
**W-8133 Feldafing(DE)**

Rank Xerox (UK) Business Services

## Description

La présente invention concerne les machines statiques supraconductrices à circuit magnétique, comprenant des enroulements supraconducteurs à très basse température et un ou des circuits magnétiques à température notablement plus élevée proche de la température ambiante. Elle s'applique typiquement aux transformateurs, comme décrit par exemple dans la Revue Générale de l'Electricité, vol. 83, n° 10, octobre 1974, page 697 - 702, G Bronca et al. "les aimants supraconducteurs en physique: problèmes et perspectives.".

La demande de brevet FR-A-2 551 254 du 30 août 1983 au nom d'Alsthom-Atlantique porte sur des brins supraconducteurs utilisables économiquement aux fréquences industrielles. Ceux-ci permettent d'obtenir des densités de courant très élevées, de l'ordre de quelques $10^9$ A/m², tout en présentant des pertes réduites aux fréquences industrielles habituelles de 50 ou 60 Hz. Dans ces conditions, on peut réduire très notablement la section du circuit magnétique par rapport à celle d'une machine classique en augmentant le nombre d'ampères-tour, ce qui conduit à un abaissement du poids de la machine d'un facteur 10 environ et à une diminution des pertes totales de la machine d'un facteur 3 environ. En outre, l'utilisation de tels conducteurs à matrice de forte résistivité électrique, permet en cas de "défaut" sur le réseau (par exemple un court-circuit), de limiter l'appel de surcourant de la machine à quelques dizaines de pour cent et par là même réduit considérablement les problèmes de tenue mécanique de la machine et de dimensionnement des auxiliaires de sécurité.

La supraconductivité n'étant obtenue qu'au voisinage de la température de l'hélium liquide, il est nécessaire de disposer les enroulement supraconducteurs dans un cryostat, le circuit magnétique restant à une température notablement plus élevée, et de préférence au voisinage de la température ambiante, pour réduire les pertes dans celui-ci.

Toutefois, si l'on dispose autour des bras du circuit magnétique des cryostats métalliques annulaires, il apparaît par courants induits des pertes beaucoup trop importantes. Si ces cryostats sont en matériaux isolants, les problèmes de jonctions sont très compliqués dans la mesure où toute jonction métallique est à bannir pour cause de courants induits et où tout chauffage à des températures de quelques centaines de degrés, afin d'assurer la jonction, est à proscrire pour cause de détérioration des propriétés des matériaux supraconducteurs.

La présente invention a donc pour but, pour des machines statiques supraconductrices à circuit magnétique, d'aménager dans un milieu à très basse température (hélium liquide par exemple) une zone à température notablement plus élevée (anti-cryostat) dans laquelle se trouve le circuit magnétique. Par cette conception même d'anti-cryostat, les enroulements supraconducteurs sont réalisés une fois cette zone aménagée (plus de problème de chauffage) et le plan de joint de l'anti-cryostat parallèle aux lignes de forces magnétiques du circuit magnétique permet d'éviter tout courant de circulation en son sein.

Une machine statique supraconductrice à circuit magnétique selon l'invention est caractérisée en ce que le ou les circuits magnétiques sont disposés dans au moins une enceinte thermiquement isolée, disposée elle-même à l'intérieur d'une enceinte extérieure à très basse température contenant les enroulements supraconducteurs.

Elle répond en outre de préférence à au moins l'une des caractéristiques suivantes :

- l'enceinte contenant le circuit magnétique résulte de la jonction de deux demi-coquilles dont le plan d'assemblage est parallèle aux lignes de forces du circuit magnétique
- le ou les circuits magnétiques sont disposés directement à l'intérieur de l'enceinte thermiquement isolée et comportent un canal intérieur de refroidissement
- les enroulements sont bobinés sur le ou les circuits magnétiques enfermés dans leur enceinte
- l'enceinte contenant le circuit magnétique, est disposée à l'intérieur d'une enceinte sous vide de même forme générale contenant un isolant calorifique
- une enceinte contenant le circuit magnétique, ou le circuit magnétique lui-même, sont disposés à l'intérieur d'un enceinte thermiquement isolée de même forme générale et contenant un isolant calorifique
- l'enceinte thermiquement isolée est supportée par une enceinte interne contenant le circuit magnétique, ou par le circuit magnétique lui-même, par l'intermédiaire de supports à faibles pertes calorifiques
- l'enceinte ou les enceintes contenant le circuit magnétique sont en un matériau isolant composite ou en matériaux isolants assemblés, assurant une étanchéité à l'hélium et une discontinuité électrique dans des plans orthogonaux aux lignes de flux du circuit magnétique
- les enroulements inducteurs et induits sont enchevêtrés et réalisés à l'aide de conducteurs supraconducteurs à matrice très fortement résistive.

Il est décrit ci-après, à titre d'exemple et en référence aux figures du dessin annexé, un transformateur monophasé à enroulements primaire et secondaire supraconducteurs enchevêtrés selon l'invention, refroidis à l'hélium liquide et à circuit magnétique à température notablement plus élevée.

La figure 1 représente le transformateur en coupe par un plan vertical.

La figure 2 représente une coupe à plus grande échelle selon l'axe II-II de la figure 1.

La figure 3 représente en coupe verticale à plus grande échelle le circuit magnétique et les enroulements du transformateur, ainsi que l'enceinte entourant le circuit magnétique, avec des centreurs à faibles pertes calorifiques centrant le circuit magnétique par rapport aux enroulements du transformateur.

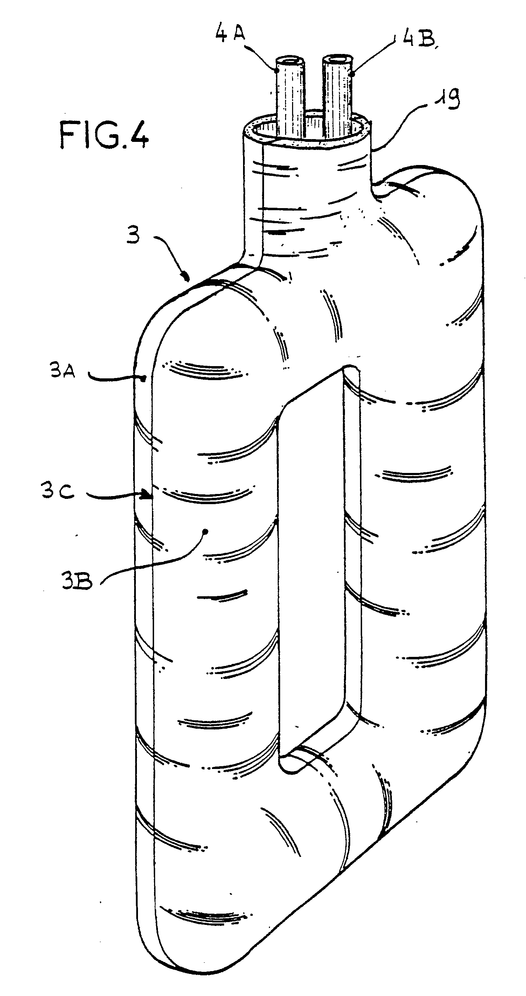

La figure 4 représente en perspective l'enceinte étanche du circuit magnétique (anti-cryostat), enceinte constituée de deux demi-coquilles identiques avec un plan de joint parallèle au circuit magnétique.

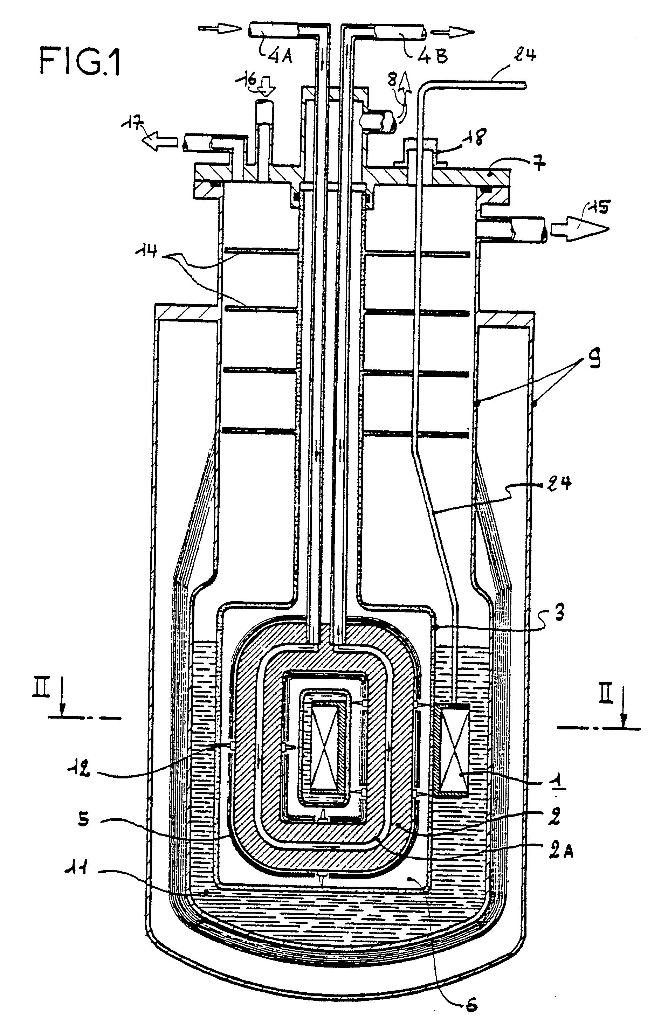

Dans les figures 1, 2, 3, les enroulements primaire et secondaire enchevêtrés sont représentés schématiquement en 1A pour le primaire et 1B pour le secondaire.

Le circuit magnétique 2 de forme générale rectangulaire comporte en son centre un canal étanche de refroidissement 2A. Deux tubes en matière isolante et étanches 4A et 4B permettent l'amenée et l'évacuation du fluide de refroidissement (air, huile, alcool, vapeur d'hélium, etc...). Ces deux tubes supportent également le poids de l'ensemble circuit magnétique, anti-cryostat, bobinages supra-conducteurs et écrans thermiques (14), par rapport au couvercle 7 à température ambiante du cryostat 9.

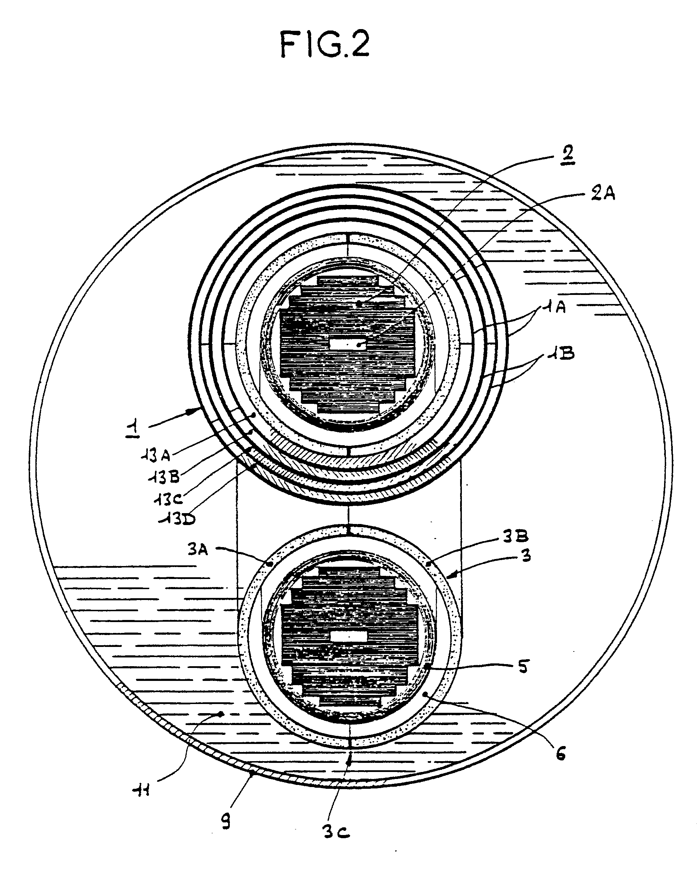

De façon connue en elle-même, la section droite du circuit magnétique 2 est en gradins comme représenté sur la figure 2 de façon à utiliser aussi complètement que possible la section interne de l'enveloppe 3.

L'enceinte 3 à une température de 4,2° K est sous vide interne 6 avec pompage par l'orifice 8.

Le circuit magnétique 2 est entouré de plusieurs couches de superisolant 5, à bandes aluminisées de polytéréphthalate d'éthylène-glycol (marque Mylar), destinées à diminuer les pertes thermiques par rayonnement entre le circuit magnétique 2 à température proche de l'ambiante et l'enceinte 3 à température de 4,2° K entourée d'un bain d'hélium liquide 11.

Des centreurs 12 à très faibles pertes thermiques assurent le centrage vertical et latéral de l'enceinte 3 par rapport au circuit magnétique 2.

L'enceinte 3 est constituée de deux demi-coquilles identiques 3A et 3B avec un plan de joint 3C parallèle aux lignes de force du circuit magnétique (figure 2).

Elle est constituée de matériaux divers assurant une étanchéité électrique dans des plans orthogonaux aux lignes de flux du circuit magnétique (par exemple verre-résines synthétiques, titane-céramique etc...) ; elle est reliée au couvercle 7 à température ambiante par un tube de faible conduction thermique sous vide intérieur 6.

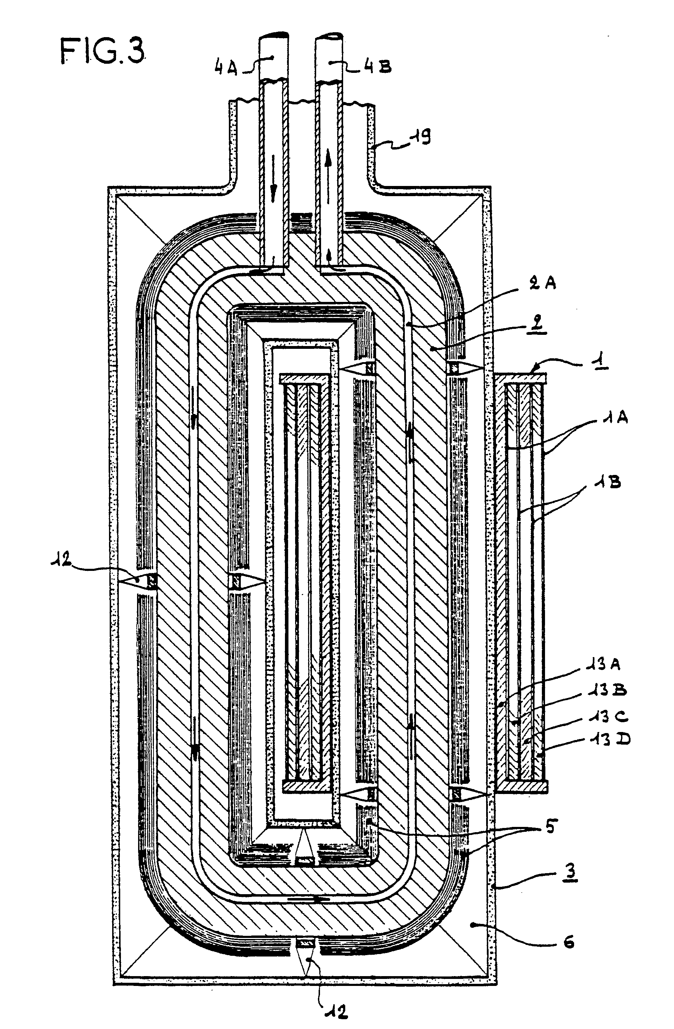

La bobine supraconductrice 1 est composée d'enroulements primaires 1A et d'enroulements secondaires 1B enchevêtrés. Ces enroulements sont bobinés sur des mandrins en demi-coquilles 13A, 13B, 13C, 13D centrés sur l'enceinte 3 et assemblés au fur et à mesure du bobinage (figures 2 et 3). Ils sont réalisés à partir de conducteurs supraconducteurs à matrice très fortement résistive, afin de bloquer les sur-courants pouvant apparaître en régime de défaut du transformateur.

Les enroulements sont reliés aux circuits à haute et basse tension par quatre descentes de courant dont l'ensemble est représenté en 24 (figure 1).

L'ensemble est suspendu dans un cryostat 9 contenant de l'hélium liquide 11, les vapeurs d'hélium étant évacuées par l'orifice 15. Le remplissage en hélium liquide se fait par l'orifice 16. La sortie de la filerie des sondes de niveaux d'hélium et autres mesures se fait par l'orifice 17. les quatre descentes de courant 24 sortent par des embases isolantes 18 sur le couvercle 7.

## Revendications

1. Machine statique supraconductrice à circuit magnétique, comprenant des enroulements supraconducteurs (1) à très basse température et un ou des circuits magnétiques (2) à température notablement plus élevée, de préférence proche de la temperature ambiante, caractérisée en ce que le ou les circuits magnétiques (2) sont disposés dans au moins une enceinte thermiquement isolée (3), disposée elle-même à l'intérieur d'une enceinte extérieure (9) à très basse température contenant les enroulements supraconducteurs (1).

2. Machine selon la revendication 1, caractérisée en ce que l'enceinte (3), ou les enceintes, contenant le ou les circuits magnétiques résultent de la jonction de deux demi-coquilles (3A, 3B) dont le plan d'assemblage (3C) est parallèle aux lignes de force du circuit magnétique.

3. Machine selon les revendications 1 ou 2, caractérisée en ce que le ou les circuits magnétiques sont disposés directement à l'intérieur de l'enceinte thermiquement isolée (3) et comportent un canal intérieur de refroidissement (2A).

4. Machine selon l'une des revendications 1 à 3, caractérisée en ce que les enroulements (1A, 1B) sont bobinés sur le ou les circuits magnétiques enfermés dans leur enceinte (3).

5. Machine selon l'une des revendications 1 à 4, caractérisée en ce qu'une enceinte contenant le circuit magnétique, ou le circuit magnétique lui-même (2), sont disposés à l'intérieur de l'enceinte thermiquement isolée (3) de même forme générale et contenant un isolant calorifique (5).

6. Machine selon la revendication 5, caractérisée en ce que l'enceinte thermiquement isolée (3) est supportée par une enceinte interne contenant le circuit magnétique, ou par le circuit magnétique lui-même (2), par l'intermédiaire de supports à faibles pertes calorifiques (12).

7. Machine selon l'une des revendications 1 à 6, caractérisé en ce que l'enceinte ou les enceintes sont en un matériau isolant composite ou en matériaux isolants assemblés, assurant l'étanchéité à l'hélium et une discontinuité électrique dans des plans orthogonaux aux lignes de flux du circuit magnétique.

8. Machine selon l'une des revendications 1 à 7, caractérisée en ce que les enroulements inducteurs et induits sont enchevêtrés (1A, 1B) et réalisés à l'aide de conducteurs supraconducteurs multifilamentaires à matrice très fortement résistive.

## Claims

1. A superconducting static machine having a magnetic circuit, the machine comprising very low temperature superconducting windings (1) and at least one magnetic circuit (2) at a considerably higher temperature, preferably at a temperature close to ambient temperature, characterized in that the at least onew magnetic circuit (2) is disposed in at least one thermally-insulating chamber (3), itself disposed inside an external very low temperature chamber (9) containing the superconducting windings (1).

2. A machine according to claim 1, characterized in that the chamber(s) (3) containing the magnetic circuit(s) result(s) from joining two half-shells (3A, 3B) whose assembly plane (3C) is parallel to the lines of force of the magnetic circuit.

3. A machine according to claim 1 or 2, characterized in that the at least one magnetic circuit is directly disposed inside the thermally insulating chamber (3) and includes an inside cooling channel (2A).

4. A machine according to any one of claims 1 to 3, characterized in that the windings (1A, 1B) are wound on the at least one magnetic circuit enclosed in its chamber (3).

5. A machine according to any one of claims 1 to 4, characterized in that a chamber containing the magnetic circuit, or the magnetic circuit itself (2) is disposed inside the thermally insulating chamber (3) of the same general shape and containing a thermal insulator (5).

6. A machine according to claim 5, characterized in that the thermally insulating chamber (3) is supported by an internal chamber containing the magnetic circuit, or by the magnetic circuit itself (2), via low heat loss supports (12).

7. A machine according to any one of claims 1 to 6, characterized in that the at least one chamber is made of a composite insulating material or of an assembly of insulating materials, providing helium sealing and electrical discontinuity in planes orthogonal to the lines of flux of the magnetic circuit.

8. A machine according to any one of claims 1 to 7, characterized in that the primary and secondary windings are interlocking (1A, 1B) and made by means of multifilament superconducting conductors having a highly resistive matrix.

## Patentansprüche

1. Statische supraleitende Maschine mit Magnetkreis, die supraleitende Wicklungen (1) auf sehr niedriger Temperatur und einem oder mehrere Magnetkreise (2) auf wesentlich höherer Temperatur, vorzugsweise in der Nähe der Umgebungstemperatur, aufweisen, dadurch gekennzeichnet, daß der bzw. die Magnetkreise (2) in mindestens einer thermisch isolierten Hülle (3) untergebracht ist bzw. sind, die ihrerseits im Inneren einer auf sehr niedriger Temperatur gehaltenen Außenhülle (9) untergebracht ist, welche die supraleitenden Wicklungen (1) enthält.

2. Maschine nach Anspruch 1, dadurch gekennzeichnet, daß die den Magnetkreis oder die Magnetkreise enthaltende Hülle (3) oder Hüllen sich durch Zusammenfügen zweier Halbschalen (3A, 3B) ergibt bzw. ergeben, deren Verbindungsebene (3C) parallel zu den Kraftlinien des Magnetkreises liegt.

3. Maschine nach Anspruch 1 oder 2, dadurch gekennzeichnet, daß der bzw. die Magnetkreise direkt im Inneren der thermisch isolierten Hülle (3) angeordnet ist bzw. sind und einen inneren Kühlkanal (2A) aufweist bzw. aufweisen.

4. Maschine nach einem der Ansprüche 1 bis 3, dadurch gekennzeichnet, daß die Wicklungen (1A, 1B) auf den bzw. auf die in ihrer Hülle (3) eingeschlossenen Magnetkreis bzw. Magnetkreise aufgewickelt sind.

5. Maschine nach einem der Ansprüche 1 bis 4, dadurch gekennzeichnet, daß eine den Magnetkreis enthaltende Hülle oder der Magnetkreis selbst im Inneren der thermisch isolierten Hülle (3) angeordnet ist, welche die gleiche geometrischer Grundform besitzt und ein Wärmeisoliermittel (5) enthält.

6. Maschine nach Anspruch 5, dadurch gekennzeichnet, daß die thermisch isolierte Hülle (3) durch eine innere Hülle, welche den Magnetkreis enthält, oder durch den Magnetkreis (2) selbst über Stützen (12) mit geringem Wärmeverlust gehalten wird.

7. Maschine nach einem der Ansprüche 1 bis 6, dadurch gekennzeichnet, daß die Hülle oder die Hüllen aus einem isolierenden Verbundmaterial oder aus miteinander verbundenen Isoliermaterialien besteht bzw. bestehen, die eine Helium-Abdichtung und eine elektrische Diskontinuität in den senkrecht zu den Flußlinien des Magnetkreises verlaufenden Ebenen gewährleisten.

8. Maschine nach einem der Ansprüche 1 bis 7, dadurch gekennzeichnet, daß die induzierenden und die induzierten Wicklungen (1A, 1B) ineinander verschachtelt sind und aus mehradrigen Supraleitern aus einer Matrix sehr hohen Widerstands bestehen.

# FIG.1

# FIG.2

FIG.3

FIG.4